# EUROPÄISCHE PATENTSCHRIFT

(11) **EP 2 020 175 B1**
(45) Veröffentlichungstag und Bekanntmachung des Hinweises auf die Patenterteilung: **10.09.2014**
(21) Anmeldenummer: 08012749.1
(22) Anmeldetag: 15.07.2008
(51) Int. Cl.: A01D 43/08

(54) **Erntemaschine mit verstellbarer Überladeeinrichtung**
Harvesting machine with an adjustable transfer device
Moissonneuse dotée d'un dispositif de transbordement réglable

(30) Priorität: 03.08.2007 DE 102007036799
(43) Veröffentlichungstag der Anmeldung: 04.02.2009
(73) Patentinhaber: CLAAS Selbstfahrende Erntemaschinen GmbH, 33426 Harsewinkel (DE)
(72) Erfinder: Haffert, Andreas, Dr., 33334 Gütersloh (DE)
(74) Vertreter: Heuer, Wilhelm

(56) Entgegenhaltungen:
- EP-A- 0 492 195
- DE-A1- 3 224 269
- DE-A1- 10 335 583
- US-A- 1 336 065
- US-A- 2 778 510
- US-A- 3 464 471
- US-A- 4 184 274
- US-A1- 2004 116 169

## Beschreibung

Die vorliegende Erfindung betrifft eine selbst fahrende Erntemaschine mit einer Überladeeinrichtung zum Überladen von Erntegut aus der Erntemaschine in ein der Erntemaschine benachbartes Transportfahrzeug. Eine solche Überladeeinrichtung umfasst im Allgemeinen einen so genannten Auswurfkrümmer, einen Austragkanal, der die Bordwand eines Transportfahrzeugs überbrückend platzierbar ist, um das Erntegut in einen nach oben offenen Laderaum des Transportfahrzeugs einzufüllen.

Es besteht bereits seit längerem die Tendenz, durch immer größere Erntemaschinen den Erntevorgang zu beschleunigen und zu rationalisieren. Damit einher geht das Bedürfnis, große Transportfahrzeuge zum Transportieren des Erntegutes verwenden zu können, um die Zahl der Pendelfahrten zwischen Feld und Lager zum Einbringen des Ernteguts zu minimieren. Diese Transportfahrzeuge können sehr hohe Überladehöhen aufweisen. Um ein solches Transportfahrzeug beladen zu können, muss die Erntemaschine in der Lage sein, das Erntegut auf die benötigte Höhe anzuheben. Wenn das Transportfahrzeug die für den Verkehr auf öffentlichen Straßen maximal zulässige Höhe hat, benötigt folglich die Erntemaschine zum Beladen des Transportfahrzeuges einen Auswurfkrümmer, der über diese maximal zulässige Höhe hinausreicht. Eine solche Erntemaschine dürfte öffentliche Straßen nicht benutzen.

Ein weiteres Problem ergibt sich in der Erntemaschine selbst durch die Notwendigkeit, einen störungsfreien Gutfluss durch die gesamte Maschine hindurch zu gewährleisten. Je breiter die Maschine und die an ihr verwendeten Arbeitsaggregate wie etwa Erntevorsatz, Häckseltrommel oder Crackerwalzen werden, um so schwieriger ist es, das Erntegut auf den Querschnitt des Auswurfkrümmers zu bündeln und über diesen auszugeben.

Aus US 2 778 510 A ist eine Erntemaschine nach dem Oberbegriff des Anspruchs 1 bekannt. Ein Auswurfkrümmer ist hier an einen vertikalen Schacht eines Maschinengehäuses angeschlossen, und der Schacht umfasst zwei Schachtabschnitte, die gegeneinander drehbar gekoppelt an eine Deichsel drehbar sind, damit das Ende des Auswurfkrümmers sich stets über einem über die Deichsel mit der Erntemaschine verbundenen Anhänger befindet.

DE 32 24 269 A1 schlägt eine Erntemaschine mit einem Auswurfkrümmer vor, der in zwei schwenkbar miteinander verbundene Abschnitte unterteilt ist. In einer Arbeitsstellung des Auswurfkrümmers bilden die beiden Abschnitte eine durchgehende Leitung und berühren sich etwa in Höhe des Daches einer Fahrerkabine der Erntemaschine. Der obere Abschnitt des Auswurfkrümmers kann abwärts geschwenkt werden, um die Höhe der Erntemaschine auf einen für den Straßenverkehr tauglichen Wert zu verringern, wobei die Leitung unterbrochen wird. Auch in der abwärts geschwenkten Stellung behindert der Auswurfkrümmer die Sicht aus der Fahrerkabine.

Aus DE 102 11 706 A1 ist eine Erntemaschine mit einem Auswurfkrümmer bekannt, der an seinem freien Ende durch ein verschiebbares Element in im Wesentlichen horizontaler Richtung verlängerbar ist. Das verschiebbare Element ermöglicht das gleichmäßige Beladen eines Begleitfahrzeuges mit Erntegut auch dann, wenn die Erntemaschine mit einem weit zur Seite ausladendem Erntevorsatz, insbesondere einem Maisgebiss, bestückt ist, der das Begleitfahrzeug daran hindert, eng neben der Erntemaschine herzufahren. Da das freie Ende des Auswurfkrümmers im Wesentlichen horizontal verläuft, ist mit dem Ausstrecken oder Einziehen des verschiebbaren Elementes keine nennenswerte Hähenänderun.g des Auswurfkrümmers verbunden.

US 4 148 274 A beschreibt einen Auswurfkrümrneraufbau für eine Schneefräse mit Schachtabschnitten, die zur Anpassung an ein Transportfahrzeug teleskopisch gegeneinander höhenverstellbar sind.

US 1 336 065 A beschreibt eine Heulademaschine mit einem Auswurfkrümmer, der zwei teleskopisch gegeneinander verschiebbare rohrförmige Schachtabschnitte umfasst. Der äußere der beiden Schachtabschnitte ist an seinem unteren Ende durch einen nach unten divergierenden Abschnitt verlängert.

Aufgabe der vorliegenden Erfindung ist, eine Erntemaschine zu schaffen, die in der Lage ist, hochbordige Begleitfahrzeuge zu beladen, ohne dass die Straßenverkehrstauglichkeit durch den Auswurfkrümmer beeinträchtigt ist, und dabei einen strömungsgünstigen Übergang zu einer Verarbeitungskammer der Erntemaschine schafft, wie etwa einer Häckseltrommel, die sich über einen beträchtlichen Teil der Breite des Maschinengehäuses erstreckt.

Die Aufgabe wird gelöst durch eine Erntemaschine mit den Merkmalen des Anspruchs 1.

Eine Konsequenz der divergenten Form ist, dass in abgesenkter Stellung zwischen den Schachtabschnitten ein Zwischenraum vorhanden ist Wenn erster und zweiter Schachtabschnitt divergent sind, ist eine obere Anschlagstellung des ersten Schachtabschnittes durch einen Kontakt mit dem umgebenden zweiten Schachtabschnitt definiert.

Die divergente Form des zweiten Schachtabschnitts oder des ganzen Schachts ermöglicht, an einem Einlass am unteren Ende des Schachts einen Gutstrom von hoher Breite aufzunehmen. Insbesondere kann eine Einlassbreite am unteren Ende des Schachts über 700 mm betragen. So können dem Schacht Verarbeitungswerkzeuge wie etwa ein Erntevorsatz, eine Häckseltrommel oder Crackerwalzen großer Breite vorgelagert sein, die einen schnellen und wirtschaftlichen Ernteeinsatz ermöglichen.

Vorzugsweise divergieren die wände des zweiten Schachtabschnitts nach unten unter einem Winkel von maximal 20°, vorzugsweise 10° bis 18°, zur Schachtachse. Kleinere Winkel machen bei gegebener Einlassbreite am unteren Ende des Schachts eine unzweckmäßig große Bauhöhe des Schachts erforderlich; größere Winkel haben das Problem, das sich Erntegut an der Innenfläche des Schachtabschnitts ablagern kann

An dem nach unten divergierenden Schacht können Nachbeschleuniger vorgesehen sein. Ihre Aufgabe ist im Wesentlichen nur das Beschleunigen des Ernteguts in Schachtlängsrichtung, da das Zusammenführen zur Längsmittelebene im Wesentlichen durch die Gestalt des Schachts erreicht wird.

Vorzugsweise ist der erste Schachtabschnitt schräg nach oben und fort von einer Fahrerkabine der Erntemaschine verschiebbar. Während somit in der abgesenkten Stellung die Auswurföffnung nahe an der Fahrerkabine liegt und der Auswurfkrümmer für die Straßenfahrt mit geringem Überstand auf dem Maschinengehäuse platziert werden kann, ist in der angehobenen Stellung der Abstand des Auswurfkrümmers zur Fahrerkabine und damit die Reichweite des Auswurfkrümmers vergrößert.

Zweckmäßigerweise ist der Auswurfkrümmer ferner um eine vertikale Achse mit der Auswurföffnung als Mittelpunkt drehbar. Allgemein behindert die Fahrerkabine eine Drehung des Auswurfkrümmers um so weniger, je höher die Auswurföffnung liegt. Während bei einem herkömmlichen Feldhäcksler die Drehbewegungsfreiheit des Auswurfkrümmers meist nur wenig über 180° hinaus geht, ist es mit der Erfindung ohne weiteres möglich, eine Drehbewegungsfreiheit des Auswurfkrümmers von 210° oder mehr, besser noch von wenigstens 240° oder gar eine unbeschränkte Drehbewegungsfreiheit des Auswurfkrümmers zu realisieren. Allgemein ist die erreichbare Drehbewegungsfreiheit um so größer, je höher die Auswurföffnung an der Erntemaschine liegt. Meist ist bereits bevor die Auswurföffnung über das Dach der Fahrerkabine angehoben ist, die Drehbewegungsfreiheit unbegrenzt.

Da der Auswurfkrümmer somit nach vorn geschwenkt sein kann, muss ein zu beladendes Fahrzeug nicht zwangsläufig in herkömmlicher Weise neben dem Erntefahrzeug oder hinter ihm her fahren, sondern es kann auch einen Vorsprung gegenüber dem Erntefahrzeug haben. Da der Fahrer der Erntemaschine das Transportfahrzeug beim Fahren gut sehen kann, ohne sich umschauen zu müssen, ist der Erntebetrieb vereinfacht.

Aus der über eine Oberseite des Maschinengehäuses aufragenden Arbeitsstellung ist der Auswurfkrümmer wenigstens bis in eine mit der Oberseite im Wesentlichen bündige Stellung absenkbar, um die Erntemaschine für Straßenfahrt tauglich zu machen.

Um den Auswurfkrümmer für die Fahrt an dem Maschinengehäuse zu sichern und/oder eine Sichtbeeinträchtigung des Fahrers durch den Auswurfkrümmer zu minimieren, ist letzterer vorzugsweise um eine der Auswurföffnung benachbarte horizontale Achse aus seiner angehobenen Arbeitsstellung in eine abgesenkte Fahrstellung schwenkbar.

Die Erfindung ist anwendbar für beliebige Erntemaschinen, die gesammeltes Erntegut mit Hilfe eines Auswurfkrümmers an ein Begleitfahrzeug übergeben. Ein bevorzugtes Anwendungsgebiet der Erfindung sind allerdings Feldhäcksler, da bei diesen im Allgemeinen Erntegut während des Erntevorganges kontinuierlich über den Auswurfkrümmer ausgegeben wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines erfindungsgemäßen Feldhäckslers mit Auswurfkrümmer in Arbeitsstellung;
- Fig. 2: eine teilweise aufgeschnittene Seitenansicht des Feldhäckslers;
- Fig. 3: einen Detailschnitt aus Fig. 2 ;
- Fig. 4: eine perspektivische Ansicht des Feldhäckslers mit Auswurfkrümmer in Fahrtstellung; und
- Fig. 5: eine Seitenansicht des Feldhäckslers mit Auswurfkrümmer in Fahrtstellung.

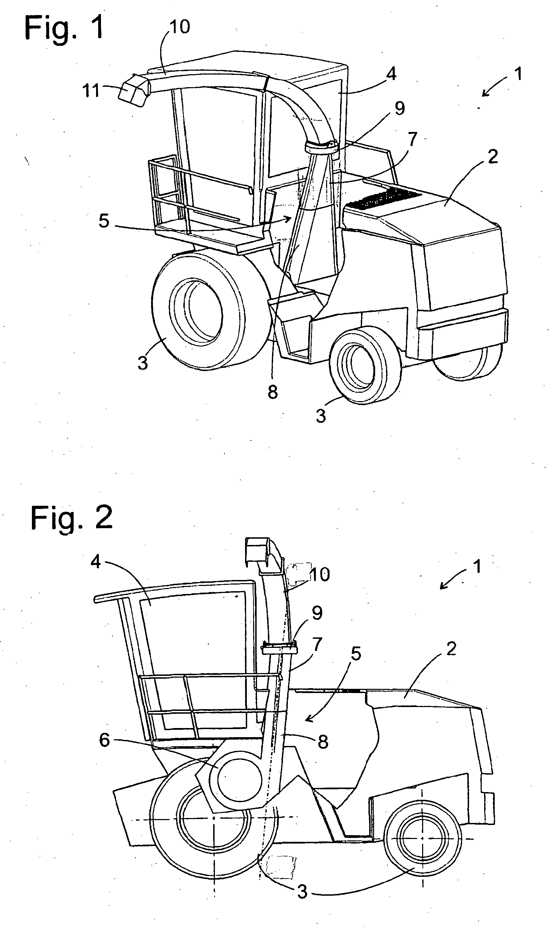

Fig. 1 zeigt einen erfindungsgemäßen Feldhäcksler 1 in perspektivischer Ansicht schräg von hinten. Ein Maschinengehäuse 2 des Feldhäckslers 1 enthält einen Motor zum Antreiben der Räder 3, interner Aggregate des Maschinengehäuses 2 wie etwa einer Häckseltrommel und /oder von Crackerwalzen sowie eines in der Figur nicht dargestellten, an einer Vorderseite des Feldhäckslers 1 montierbaren Erntevorsatzes. Mit Hilfe des Erntevorsatzes vom Boden aufgenommenes Erntegut wird in einer in der Figur nicht sichtbaren, im Inneren des Maschinengehäuses 2 unterhalb einer Fahrerkabine 4 angeordneten Häckseltrommel zerkleinert, im Erntegut enthaltene Körner, insbesondere Maiskörner, werden von der Häckseltrommel nachgeschalteten Crackerwalzen zerkleinert, und schließlich wird das Erntegut in einen hinter der Fahrerkabine 4 aufsteigenden Auswurfschacht 5 ausgegeben. Wie in Fig. 2 zu sehen, ist an einem unteren Ende des Auswurfschachtes 5 ein Nachbeschleuniger 6 angeordnet. Dieser umfasst in einer Kammer einen Rotor mit einer Mehrzahl von rotierenden Schaufeln, die einerseits das zerkleinerte Erntegut durch unmittelbaren Kontakt im Auswurfschacht 5 aufwärts treiben und andererseits ein Radialgebläse bilden, dessen Luftstrom das Erntegut über die gesamte Länge des Auswurfschachts und darüber hinaus vorwärts treibt.

Der Auswurfschacht ist aus zwei teleskopisch ineinandergreifenden Schachtabschnitten 7, 8 zusammengesetzt. An einem den oberen Abschluss des Schachtabschnittes 7 bildenden Drehkranz 9 ist ein Auswurfkrümmer 10 um eine vertikale Achse des Drehkranzes 9 drehbar montiert. Die Figuren 1 und 2 zeigen den Auswurfkrümmer 10 in einer Orientierung, die das Überladen von Erntegut in ein neben dem Feldhäcksler 1 herfahrendes, nicht dargestelltes Transportfahrzeug ermöglicht. Eine verstellbare Auswurfklappe 11 am freien Ende des Auswurfkrümmers 10 ist steil nach unten gerichtet, so dass das Erntegut nahezu vertikal nach unten in das Transportfahrzeug abgeworfen wird. Durch Drehen des Auswurfkrümmers 10 und Verstellen der Klappe 11 ist eine genaue Kontrolle über die Verteilung des Ladegutes in dem Transportfahrzeug möglich, so dass dessen Fassungsvermögen gut ausgeschöpft werden kann.

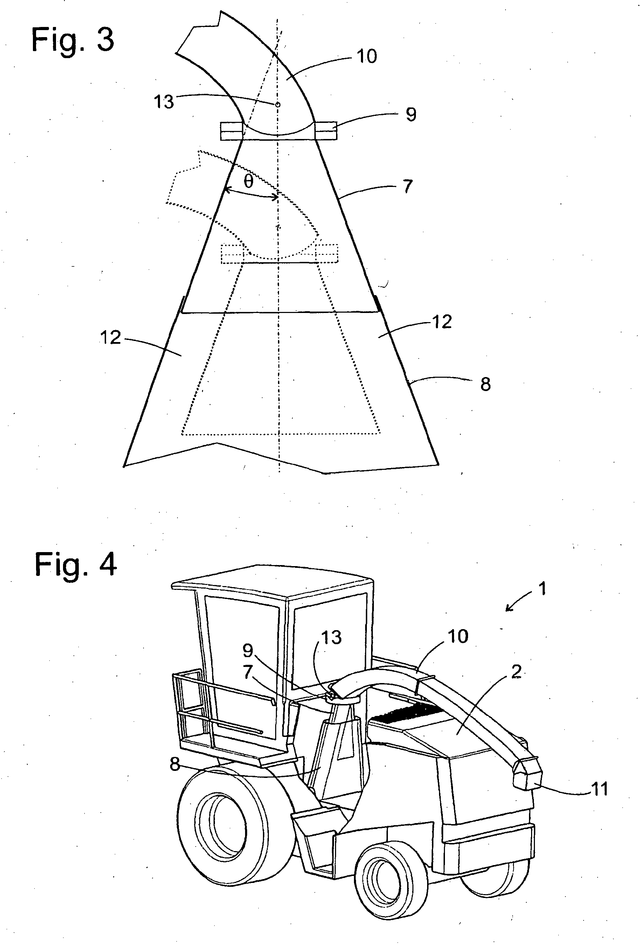

Fig. 3 zeigt einen Schnitt durch den Auswurfschacht 5 entlang der Linie III-III der Fig. 2. Während, wie in Fig. 2 gezeigt, die Abmessung des Auswurfschachtes 5 quer zur Schnittebene III-III im Wesentlichen über die gesamte Höhe des Auswurfschachtes 5 hinweg konstant ist, nimmt in der Ebene der Fig. 3 die Breite des Auswurfschachtes 5 von dem kreisrunden Drehkranz 9 aus nach unten kontinuierlich zu. Diese Form des Auswurfschachtes 5 erleichtert den Übergang des gehäckselten Erntegutes aus der sich über einen Großteil der Breite des Maschinengehäuses 2 erstreckenden Häckseltrommel in den Auswurfschacht 5. Die Häckseltrommel kann eine Breite von 800 oder gar 1000 mm und darüber haben; ggf. nachfolgende Crackerwalzen sind jeweils etwas schmaler als die Häckseltrommel, um den Erntegutfluss zu bündeln, und ein Einlass am unteren Ende des Schachtabschnitts 8 ist wiederum etwas schmaler als die Crackerwalzen.

Fig. 3 zeigt mit durchgezogenen Linien den oberen Schachtabschnitt 7 in einer maximal angehobenen Stellung. In dieser Stellung liegt ein unterer Rand des Schachtabschnittes 7 vollumfänglich von innen an einem oberen Rand des unteren Schachtabschnittes 8 an. So bilden die Schachtabschnitte 7, 8 und der daran anschließende Auswurfkrümmer 10 eine kontinuierliche Leitung für das Erntegut, von der dieses, angetrieben vom Luftstrom des Nachbeschleunigers 6, aus der Häckseltrommel bis in den Laderaum des Transportfahrzeuges geführt wird. Die Wände der Schachtabschnitte 7, 8 spannen mit der strichpunktiert eingezeichneten Längsachse des Schachts einen Winkel θ von 14° auf.

Aus der in Fig. 3 mit durchgezogenen Linien dargestellten Stellung ist der obere Schachtabschnitt 7 und mit ihm der Auswurfkrümmer 10 in eine gestrichelt gezeigte Stellung absenkbar, in der sich die beiden Schachtabschnitte 7, 8 in der Höhe weitestgehend überschneiden und zwischen den Schachtabschnitten 7, 8 beiderseits des Schachtabschnittes 7 breite Zwischenräume 12 existieren.

Es ist leicht nachzuvollziehen, dass in dieser abgesenkten Konfiguration die Ausgabe von Erntegut nicht ohne Weiteres möglich ist. Selbst wenn man annimmt, dass der Schachtabschnitt 7 in seiner gestrichelt dargestellten abgesenkten Stellung den Nachbeschleuniger 6 nicht blockiert, würde ein von ihm angetriebener Luftstrom und das von diesem mitgenommene gehäckselte Erntegut nicht nur über den Schachtabschnitt 7 und den daran angeschlossenen Auswurfkrümmer 10 ausgegeben, sondern auch durch die Zwischenräume 12, und würde daher das Transportfahrzeug nicht erreichen. Die gestrichelt dargestellte abgesenkte Stellung ist daher im Wesentlichen nur geeignet, die Höhe des Feldhäckslers 1 für den Fall zu verringern, dass dieser abgestellt werden soll oder öffentliche Straßen befahren muss.

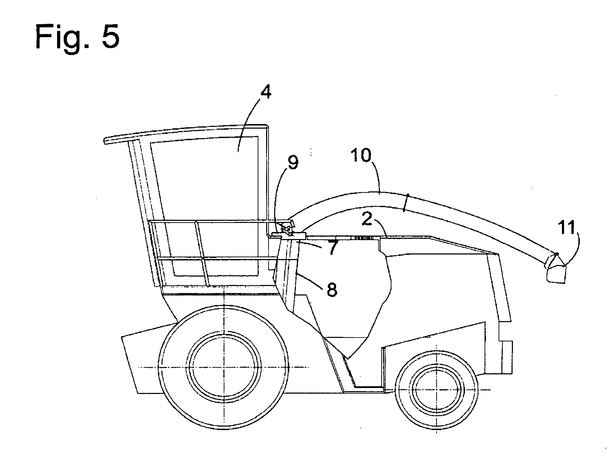

Als eine zusätzliche Maßnahme zur Höhenreduzierung des Feldhäckslers 1 bei Straßenfahrt ist der Auswurfkrümmer 10 mit dem Drehkranz 9 über ein Scharnier 13 mit horizontaler Achse verbunden. Wenn sich, wie in Fig. 4 und 5 gezeigt, der Schachtabschnitt 7 in der abgesenkten Stellung befindet, in der der Drehkranz 9 im Wesentlichen mit der Oberfläche des Maschinengehäuses 2 bündig ist, kann durch Schwenken im Scharnier 13 der Auswurfkrümmer 10 zusätzlich abgesenkt werden, so dass er sich nur knapp oberhalb des Maschinengehäuses 2 erstreckt.

Der Auswurfschacht 5 ist nicht exakt vertikal sondern bezogen auf die Fahrzeuglängsrichtung nach hinten ansteigend orientiert. Dies hat zur Folge, dass in der angehobenen Stellung der Figuren 1 und 2 der Drehkranz 9 von der Rückwand der Fahrerkabine 4 beabstandet ist. Je größer dieser Abstand ist, um so weniger ist die Drehbewegungsfreiheit des Auswurfkrümmers 10 um die vertikale Achse des Drehkranzes 9 durch die Fahrerkabine 4 eingeschränkt. Die Schachtabschnitte 7, 8 können so lang sein, dass in einer angehobenen Stellung, wenn der Drehkranz 9 oberhalb des Dachs der Kabine 4 oder knapp darunter liegt, der Auswurfkrümmer 10 eine Drehbewegungsfreiheit von 360° hat. In der abgesenkten Stellung hingegen, wie insbesondere in Fig. 5 zu sehen, ist der Drehkranz 9 unmittelbar an die Rückwand der Fahrerkabine 4 herangerückt, um so den Überstand des freien Endes 11 des Auswurfkrümmers 10 nach hinten über das Maschinengehäuse 2 hinaus zu minimieren.

### Bezugszeichen

- 1: Feldhäcksler
- 2: Maschinengehäuse
- 3: Räder
- 4: Fahrerkabine
- 5: Auswurfschacht
- 6: Nachbeschleuniger
- 7: Schachtabschnitt
- 8: Schachtabschnitt
- 9: Drehkranz
- 10: Auswurfkrümmer
- 11: Abschnitt
- 12: Zwischenraum
- 13: Scharnier

## Patentansprüche

1. Erntemaschine (1) mit einem Maschinengehäuse (2), das einen Schacht mit wenigstens einem ersten Schachtabschnitt (7) und einem zweiten Schachtabschnitt (8) umfasst, wobei eine Auswurföffnung (9) ein oberes Ende des ersten Schachtabschnitts (7) bildet und der zweite Schachtabschnitt (8) nach unten divergiert, und einem an der Auswurföffnung (9) beweglich montierten Auswurfkrümmers (10), wobei die Auswurföffnung (9) an dem Maschinengehäuse (2) höhenverstellbar ist, die Schachtabschnitte (7, 8) teleskopisch gegeneinander verschiebbar sind, und der die Auswurföffnung (9) aufweisende erste Schachtabschnitt (7) in den zweiten Schachtabschnitt (8) eingreift, **dadurch gekennzeichnet, dass** auch der erste Schachtabschnitt (7) nach unten divergiert.

2. Erntemaschine nach Anspruch 1, **dadurch gekennzeichnet, dass** die Wände des zweiten Schachtabschnitts (8) unter einem Winkel (θ) von maximal 20° zur Schachtachse nach unten divergieren.

3. Erntemaschine nach Anspruch 1 oder 2, **dadurch gekennzeichnet, dass** der Schacht einen Einlass mit einer Breite von wenigstens 700 mm aufweist.

4. Erntemaschine nach einem der Ansprüche 1 bis 3, **dadurch gekennzeichnet, dass** der erste Schachtabschnitt (7) schräg nach oben und fort von einer Fahrerkabine (4) der Erntemaschine (1) verschiebbar ist.

5. Erntemaschine nach einem der vorhergehenden Ansprüche, **dadurch gekennzeichnet, dass** die Auswurföffnung (9) bis über das Dach einer Fahrerkabine (4) anhebbar ist.

6. Erntemaschine nach einem der vorhergehenden Ansprüche, **dadurch gekennzeichnet, dass** der Auswurfkrümmer (10) um eine vertikale Achse mit der Auswurföffnung (9) als Mittelpunkt drehbar ist.

7. Erntemaschine nach Anspruch 6, **dadurch gekennzeichnet, dass** die Drehbewegungsfreiheit des Auswurfkrümmers (10) um die vertikale Achse wenigstens 240°, vorzugsweise 360° beträgt.

8. Erntemaschine nach einem der vorhergehenden Ansprüche, **dadurch gekennzeichnet, dass** die Auswurföffnung (9) von einer über eine Oberseite des Maschinengehäuses (2) aufragenden Stellung wenigstens bis in eine mit der Oberseite im Wesentlichen bündige Stellung absenkbar ist.

9. Erntemaschine nach einem der vorhergehenden Ansprüche, **dadurch gekennzeichnet, dass** der Auswurfkrümmer (10) um eine der Auswurföffnung benachbarte horizontale Achse aus einer angehobenen Arbeitsstellung in eine abgesenkte Fahrstellung schwenkbar ist.

10. Erntemaschine nach einem der vorhergehenden Ansprüche, **dadurch gekennzeichnet, dass** sie ein Feldhäcksler (1) ist.

## Claims

1. Harvester (1), having a machinery enclosure (2) which comprises a duct having at least a first portion (7) and a second portion (8), a discharge opening (9) forming an upper end of the first portion (7) of the duct and the second portion (8) of the duct being divergent in the downward direction, and having a discharge chute (10) movably mounted on the discharge opening (9), the discharge opening (9) being adjustable in height on the machinery enclosure (2), the portions (7, 8) of the duct being displaceable relative to one another telescopically and the first portion (7) of the duct, which has the discharge opening (9), engaging in the second portion (8) of the duct, **characterised in that** the first portion (7) of the duct too is divergent in the downward direction.

2. Harvester according to claim 1, **characterised in that** the walls of the second portion (8) of the duct diverge in the downward direction from the axis of the duct at an angle (θ) of not more than 20°.

3. Harvester according to claim 1 or 2, **characterised in that** the duct has an inlet of a width of at least 700 mm.

4. Harvester according to one of claims 1 to 3, **characterised in that** the first portion (7) of the duct is displaceable obliquely upwards and away from a driver's cab (4) of the harvester (1).

5. Harvester according to one of the preceding claims, **characterised in that** the discharge opening (9) can be raised to a point above the roof of a driver's cab (4).

6. Harvester according to one of the preceding claims, **characterised in that** the discharge chute (10) is rotatable on a vertical axis with the discharge opening (9) as a centre.

7. Harvester according to claim 6, **characterised in that** the freedom of movement in rotation of the discharge chute (10) on the vertical axis is at least 240° and preferably 360°.

8. Harvester according to one of the preceding claims, **characterised in that** the discharge opening (9) can be lowered from a position in which it projects above a top face of the machinery enclosure (2) to a position in which it is substantially flush with the top face.

9. Harvester according to one of the preceding claims, **characterised in that** the discharge chute (10) can be pivoted, on a horizontal axis adjacent to the discharge opening, from a raised working position to a lowered travelling position.

10. Harvester according to one of the preceding claims, **characterised in that** it is a forage harvester (1).

## Revendications

1. Récolteuse (1), ayant une enceinte pour mécanismes (2) qui comporte un conduit ayant au moins une première partie (7) et une seconde partie (8), une ouverture de décharge (9) formant un extrémité supérieure de la première partie (7) du conduit et la seconde partie (8) du conduit étant divergente dans la direction allant vers le bas, et ayant une goulotte de décharge (10) montée de manière mobile sur l'ouverture de décharge (9), l'ouverture de décharge (9) étant réglable en hauteur sur l'enceinte pour mécanismes (2), les parties (7, 8) du conduit étant en mesure d'être déplacées l'une par rapport à l'autre de manière télescopique et la première partie (7) du conduit, qui a l'ouverture de décharge (9), entrant en prise dans la seconde partie (8) du conduit, **caractérisée en ce que** la première partie (7) du conduit est également divergente dans la direction allant vers le bas.

2. Récolteuse selon la revendication 1, **caractérisée en ce que** les parois de la seconde partie (8) du conduit divergent dans la direction allant vers le bas depuis l'axe du conduit selon un angle (θ) ne faisant pas plus de 20°.

3. Récolteuse selon la revendication 1 ou la revendication 2, **caractérisée en ce que** le conduit a une entrée d'une largeur mesurant au moins 700 mm.

4. Récolteuse selon l'une des revendications 1 à 3, **caractérisée en ce que** la première partie (7) du conduit est en mesure d'être déplacée de manière oblique vers le haut et en s'éloignant d'une cabine de conduite (4) de la récolteuse (1).

5. Récolteuse selon l'une des revendications précédentes, **caractérisée en ce que** l'ouverture de décharge (9) est en mesure d'être relevée jusqu'à un point situé au-dessus du toit d'une cabine de conduite (4).

6. Récolteuse selon l'une des revendications précédentes, **caractérisée en ce que** la goulotte de décharge (10) est en mesure de tourner sur un axe vertical avec l'ouverture de décharge (9) servant de centre.

7. Récolteuse selon la revendication 6, **caractérisée en ce que** la liberté de mouvement lors de la rotation de la goulotte de décharge (10) sur l'axe vertical est au moins de 240° et de préférence de 360°.

8. Récolteuse selon l'une des revendications précédentes, **caractérisée en ce que** l'ouverture de décharge (9) est en mesure d'être abaissée depuis une position dans laquelle elle fait saillie au-dessus d'une face supérieure de l'enceinte pour mécanismes (2) jusqu'à une position dans laquelle elle est sensiblement de niveau par rapport à la face supérieure.

9. Récolteuse selon l'une des revendications précédentes, **caractérisée en ce que** la goulotte de décharge (10) est en mesure d'être pivotée, sur un axe horizontal adjacent à l'ouverture de décharge, depuis une position de travail relevée jusqu'à une position de déplacement abaissée.

10. Récolteuse selon l'une des revendications précédentes, **caractérisée en ce qu'**elle est une récolteuse de fourrage ( 1 ) .
